Europäisches Patentamt

European Patent Office

Office européen des brevets

(19)

(11)  EP 1 302 501 B1

(12)  EUROPEAN PATENT SPECIFICATION

(45) Date of publication and mention
of the grant of the patent:
**10.05.2006  Bulletin 2006/19**

(51) Int Cl.:
**C08G 85/00** (2006.01)    **C08G 63/78** (2006.01)
**C08G 69/04** (2006.01)    **C08G 69/28** (2006.01)

(21) Application number: **02017838.0**

(22) Date of filing: **08.08.2002**

(54) **Process and equipment for post-polycondensation in the molten state of plastic materials**

Verfahren und Vorrichtung zur Nachpolykondensierung im Schmelzzusstand von Kunstharzen

Procédé et appareil pour la post-polycondensation de matières plastiques en phase fondue

(84) Designated Contracting States:
**AT BE BG CH CY CZ DE DK EE ES FI FR GB GR
IE IT LI LU MC NL PT SE SK TR**
Designated Extension States:
**RO**

(30) Priority: **10.08.2001  IT  MI20011773**

(43) Date of publication of application:
**16.04.2003  Bulletin 2003/16**

(73) Proprietor: **Viba Siat S.r.l.**
**20020 Vanzaghello,
Milano (IT)**

(72) Inventor: **Ballarati, Vito**
**40026 Imola,
(Province of Bologna) (IT)**

(74) Representative: **Passini, Angelo
NOTARBARTOLO & GERVASI S.P.A.,
Corso di Porta Vittoria, 9
20122 Milano (IT)**

(56) References cited:
**DD-A- 240 309           DE-A- 3 605 202
RO-B- 103 496           US-A- 4 760 129**

• **PATENT ABSTRACTS OF JAPAN vol. 1998, no.
03, 27 February 1998 (1998-02-27) & JP 09 286850
A (MITSUBISHI CHEM CORP;MITSUBISHI GAS
CHEM CO INC), 4 November 1997 (1997-11-04)**

## Description

### Field of the invention

The invention consists in a process and relative equipment for the continuous post-polycondensation in the molten state of plastic materials by means of passage through a suitable extruding distributor which has the purpose of increasing the exchange surface to improve the removal of the reaction products (water and components with low molecular weight). The purpose of this operation is to shift the equilibrium of the polycondensation towards the products, which have with a higher molecular weight, that is higher viscosity.

### Prior art

The post-polycondensation process for increasing the molecular weight of plastic materials may take place in solid phase: the granules of material are heated and maintained for a certain period of time at a suitable temperature (usually 20 to 30°C below the melting temperature of the material and in any case above its glass transition temperature).

The operation is performed under high vacuum to facilitate the removal of the reaction products (principally water) and, in general, of all the products with low molecular weight; this exchange of material takes place at the surface of each granule, which normally has a cylindrical form with a diameter of 2 to 3 mm and a length of 3 to 5 mm.

The difficulty consists in that the volatile products of the post-polycondensation reaction must move inside the crystalline structure of the granules to reach the external surface and be removed thanks to the difference between the vapour pressure in the solid phase and the partial pressure in the gas phase. This determines long reaction times and, consequently, large volumes, at a given flow rate.

To increase the mobility of the volatile species, and, thus, reduce the reaction times and volumes, it is possible to operate in the molten phase by carrying out a "flashing" operation, that is an operation of separation the two phases (liquid and gas) inside a suitable degassing tank maintained below atmospheric pressure in which the surface of the material useful for the evaporation corresponds to the surface of the liquid head inside the tank.

It is clear that the geometry of the tank plays a determining role since it determines the exchange surface of the material in relation to the mass of product to be processed and, therefore, the process velocity. However, it is impossible to produce very large tanks in order to increase the exchange surface, since at so high temperatures thermal degradation of the material may occur and, therefore, the residence times must be minimized (and, therefore, at a given flow rate, the volumes); moreover, there are dimensional limits due to the fact that it must be possible to install the equipment in existing extrusion lines, wherein limited space is available.

DE 36 05 202 and US 4,760,129 disclose a post-polycondensation process of a polyamide, carried out in a twin screw extruder having a series of alternated high and low pressure zones, with introduction of steam into the high pressure zones, and steam removal from the low pressure zones.

JP 09 286850 discloses a process for producing an aromatic polycarbonate resin carried out in several subsequent polycondensation steps, in a plurality of reactors.

### Summary of the invention

The present invention relates to a process and the relative equipment for **promoting the post-polycondensation of the polymeric products of polycondensation and for the removal of the volatile by-products according to claim 1 and a device for implementing said process according to claim 6.**

The purpose of this operation is to move the equilibrium of the polycondensation towards the products, which have higher molecular weight, that is a higher viscosity.

### Description of the figure

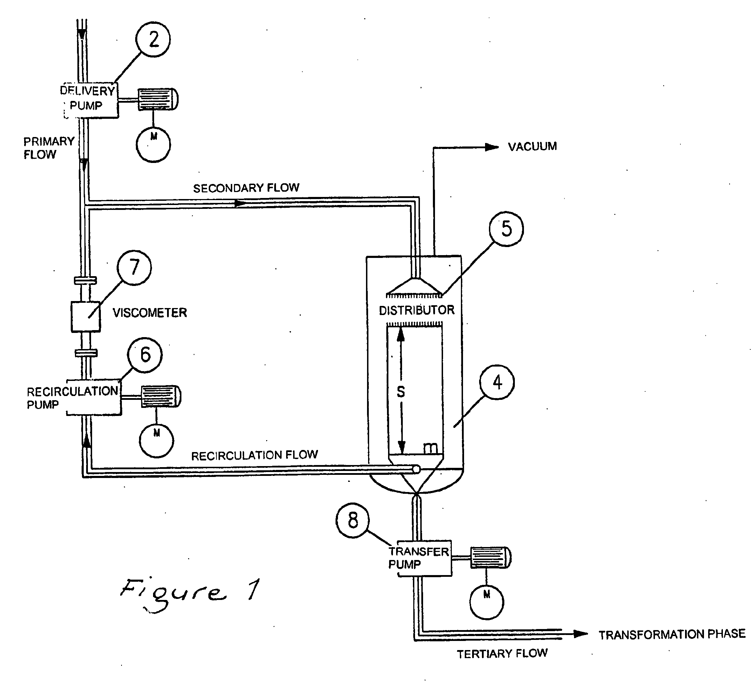

The invention shall now be described with reference to a non-limiting embodiment shown in the attached figure. Figure 1 shows a process diagram of the application.

### Detailed description

As already mentioned, the main limit of post-polycondensation in the solid state is due to the high reaction times (and, therefore, volumes) caused principally by the low mobility of products with low molecular weight inside the crystalline structure of granules. To overcome this disadvantage it was decided to operate in the molten state.

The molten material is fed into the processing device by the gear pump 2, here called "delivery pump", which is used to dose and accurately regulate the primary flow rate. The process temperature depends from the material used and is preferably 30-40°C above the melting temperature of the material: for example, PET (polyethyleneterephthalate) is normally processed at a temperature of between 290 and 310°C.

The primary flow and recirculation flow, consisting of material already processed in the equipment and, therefore, having higher viscosity, are mixed and homogenized to form the secondary flow.

The secondary flow thus formed passes through the distributor 5 contained in the post-polycondenser 4, from whose bottom of the recirculation pump 6, which gives rise to the recirculation flow, and the transfer pump 8 draw. The latter creates the tertiary flow composed of material with higher viscosity, that is molecular weight, than the starting material. The tertiary flow feeds the subsequent transformation phases.

The distributor has the task of transforming the molten mass into a plurality of continuous tubes *("strings"),* which descend, thrust by the pump 2, into the cylindrical chamber of the post-polycondenser 4 and collect in molten state, on the bottom of the chamber. The distributor consists of an extrusion plate provided with holes with diameter generally comprised between 0.1 and 1 mm, preferably of 0.4 mm. The free surface S available for evaporation of volatiles (by-products of polycondensation), for each single *"string"* will therefore be proportional to the distance s between the distributor 5 and the level m of the liquid layer on the bottom of the container and to the diameter $\varnothing$ of the *"string"* according to the formula:

$$S = \varnothing \pi s$$

An essential parameter for the operation of the device is the ratio between the surface S and the volume of the processed material. Expressing the dimensions in cm this ratio is, in the device in question, depending from the holes diameter at least 40 and preferably at least 100.

To facilitate the removal of the reaction products and thus favour post-condensation, it is preferable to work under vacuum inside the post-polycondenser 4, with an absolute pressure of about 0.1 bar or less.

The purpose of all this is to minimize the residence time of the molten mass, since the phenomenon of thermal degradation of the material becomes relevant at these temperatures.

The combined use of the special distributor 5, through which the molten material is made to pass and of vacuum determines a higher reaction speed, that is lower residence time, which results into a practically negligible thermal degradation.

It is possible to suitably design this distributor according to the specific surface required, the volume of material to be processed and the type of material.

Again, for the purpose of minimizing any thermal degradation of the processed material, it is preferable to keep the height of the liquid head inside the post-polycondenser 4 to the minimum necessary for correct operation of the equipment as a whole, remembering to keep a distance of at least about 200 mm between the distributor and the liquid head to allow the reaction.

Another fundamental parameter is the so-called recirculation ratio, which is the ratio between the recirculation flow and the primary flow, which must be adequate to the processed material, to the operating conditions (temperature and degree of vacuum), but mainly to the final viscosity required (the greater this ratio the greater the difference between the system input and output viscosity).

For example, two different types of materials were processed: a PET (polyethyleneterephtalate) and a PA66 (Nylon 6.6). The relevant data are given below.

**PET**

The material has a starting intrinsic viscosity of 0.64 dl/g and a melting point of approximately 258°C.

A process, extruder and diathermic oil heating temperature of 297°C is set, detecting a starting dynamic viscosity of 235 Pa-s.

The flow rate of the processed material is approximately 35 kg/h.

It is decided to maintain a height of the liquid head inside the post-polycondenser 4 of approximately 400 mm, and a distance between distributor and liquid head of approximately 800 mm. The degree of vacuum reached is 0.1 bar (absolute pressure).

The extrusion plate is provided withnholes with a diameter of 0.4 mm and a total sectional area of flow of the molten material of about 55 cm². 

The recirculation ratio is get at 1.5.

There is a progressive increase in dynamic viscosity of the molten material with the number of passages through the distributor 5 and the post-polycondenser 4, up to 650 Pa-s, after a total residence time of approximately 28 minutes, without any phenomena of thermal degradation being observed.

PA66

The material has a starting relative viscosity of 2.6 and a melting point of approximately 256°C.

Since PA66 is more sensitive to temperature than PET, the residence time of the molten material at high temperature is reduced by decreasing the cross section of flow, being impossible to modify the lengths of the connection pipes.

A process, extruder and diathermic oil heating temperature of 288°C is set, detecting a starting dynamic viscosity of 93 Pa-s.

The flow rate of the processed material is approximately 28 kg/h.

It is decided to maintain a height of the liquid head inside the post-polycondenser 4 of approximately 400 mm, and a distance between distributor and liquid head of approximately 800 mm. The degree of vacuum reached is 0.1 bar (absolute pressure).

The recirculation ratio is fixed as 1.5.

There is a progressive increase in dynamic viscosity of the molten material with the number of passages through the distributor 5 and the post-polycondenser 4, up to 137 Pa-s after a total residence time of approximately 15 minutes, without any phenomena of thermal degradation being observed.

**Claims**

1. Process for promoting the post-polycondensation of the polymeric products of polycondensation and for the removal of the volatile by-products found in the raw product, consisting in extrusion of the product, brought to a temperature of 30° to 40°C above the melting temperature, through an extrusion plate with a plurality of holes, suitable to give the product a filiform shape in which the ratio of the free surface useful for evaporation of the volatile by-products, with respect to the volume of the product being processed, is at least 40 when the dimensions are expressed in cm, said extrusion being performed inside a container maintained at a pressure equal to or less than 0.1 bar, with the evaporation surface of the material to be processed being renewable to different degrees by partially recycling the material itself to the evaporation equipment.

2. Process according to claim 1, wherein the material to be processed is PET.

3. Process according to claim 1, wherein the material to be processed is PA 6.6.

4. Process according to claim 1, wherein the recirculation of the material in the processing equipment is equal to a weight ratio of recirculation/material to be processed of 1.5.

5. Process according to claim 1, wherein the ratio free surface/volume of material being processed is at least 100.

6. Device for implementing the process according to claim 1, comprising, as essential elements, an extrusion plate with a plurality of holes suitable to give the polymeric material to be treated a filiform shape and a chamber with reduced pressure into which the filiform material is introduced for the removal of the volatile by-products, the polymeric material being continuously fed into and withdrawn from said chamber with reduced pressure.

**Patentansprüche**

1. Verfahren zum Fördern der Nachpolykondensation der polymeren Produkte einer Polykondensation und zum Entfernen der in dem Rohprodukt vorhandenen flüchtigen Nebenprodukte bestehend aus der Extrusion des auf eine Temperatur von 30° bis 40°C oberhalb der Schmelztemperatur gebrachten Produkts durch eine Extrusionsplatte mit einer Vielzahl an Löchern, geeignet, um dem Produkt eine Fadenform zu geben, in der das Verhältnis der für die Verdampfung der flüchtigen Nebenprodukte nutzbaren freien Oberfläche mit Bezug zu dem Volumen des verarbeiteten Produktes wenigstens 40 beträgt, wenn die Dimensionen in cm ausgedrückt sind, wobei die Extrusion innerhalb eines bei einem Druck von gleich oder weniger als 0,1 bar gehaltenen Behälters durchgeführt wird, wobei die Verdampfungsoberfläche des zu verarbeitenden Materials durch teilweises Umwälzen des Materials selbst zu der Verdampfungsapparatur auf unterschiedliche Grade erneuerbar ist.

2. Verfahren nach Anspruch 1, wobei das zu verarbeitende Material PET ist.

3. Verfahren nach Anspruch 1, wobei das zu verarbeitende Material PA 6,6 ist.

4. Verfahren nach Anspruch 1, wobei die Umwälzung des Materials in der Verarbeitungsapparatur gleich einem Gewichtsverhältnis Umwälzung/zu verarbeitendem Material von 1,5 ist.

5. Verfahren nach Anspruch 1, wobei das Verhältnis der freien Oberfläche/Volumen des zu verarbeitenden Materials wenigstens 100 bcträgt.

6. Vorrichtung zur Implementierung eines Verfahrens nach Anspruch 1, umfassend als wesentliche Elemente eine Extrusionsplatte mit einer Vielzahl an Löchern, geeignet, um dem zu behandelnden polymeren Material eine Fadcnform zu geben, sowie eine Kammer mit reduziertem Druck, in welche das fadenförmige Material zum Entfernen der flüchtigen Nebenprodukte eingeführt wird, wobei das polymere Material kontinuierlich mit reduziertem Druck in diese Kammer eingeführt und aus dieser entnommen wird.

**Revendications**

1. Procédé pour favoriser la post-polycondensation des produits polymères de polycondensation et pour éliminer les sous-produits volatils trouvés dans le produit brut, comprenant la coextrusion du produit, porté à une température supérieure de 30 à 40°C au point de fusion, par l'intermédiaire d'une plaque d'extrusion ayant une pluralité de trous, adaptée pour donner au produit une forme filiforme dans laquelle le rapport de la surface libre utile pour l'évaporation des sous-produits volatils au volume du produit traité est d'au moins 40 quand les dimensions sont exprimées en cm, ladite coextrusion étant réalisée à l'intérieur d'un récipient maintenu sous une pression égale ou inférieure à 0,1 bar, la surface d'évaporation du matériau devant être traité étant renouvelable à différents degrés par recyclage partiel du matériau lui-même vers l'équipement d'évaporation.

**2.** Procédé selon la revendication 1, dans lequel le matériau devant être traité est le PET.

**3.** Procédé selon la revendication 1, dans lequel le matériau devant être traité est le PA 6.6.

**4.** Procédé selon la revendication 1, dans lequel la recirculation du matériau dans l'équipement de traitement est égale à un rapport en poids de recirculation/matériau devant être traité de 1,5.

**5.** Procédé selon la revendication 1, dans lequel le rapport surface libre/volume de matériau devant être traité est d'au moins 100.

**6.** Dispositif pour mettre en oeuvre le procédé selon la revendication 1, comprenant, à titre d'éléments essentiels, une plaque d'extrusion ayant une pluralité de trous adaptée pour donner une forme filiforme au matériau polymère devant être traité et une chambre sous pression réduite dans laquelle le matériau filiforme est introduit pour l'élimination des sous-produits volatils, le matériau polymère étant introduit en continu dans ladite chambre sous pression réduite et retiré en continu de celle-ci.

Figure 1